# EUROPEAN PATENT SPECIFICATION

(11) **EP 1 555 152 B1**
(45) Date of publication and mention of the grant of the patent: **10.08.2011**
(21) Application number: 05000801.0
(22) Date of filing: 17.01.2005
(51) Int. Cl.: B60J 7/12, B60J 7/14

(54) **Mechanism for use with both hard and hybrid retractable cabrilolet vehicle tops**
Mechanismus für versenkbare Hardtops oder Hybridtops von Cabriolet Fahrzeugen
Méchamisme pour toit rigide et toit hybride rétractables de cabriolet

(30) Priority: 16.01.2004 US 536912 P
(43) Date of publication of application: 20.07.2005
(73) Proprietor: Webasto AG, 82131 Stockdorf (DE)
(72) Inventor: Richter, Wolfgang, Commerce TWP MI 48382 (US); Connolly, David, Highland MI 48356 (US); Wulf, Markus, Commerce TWP MI 48390 (US)
(74) Representative: Grünberg, Thomas

(56) References cited:
- EP-A1- 1 247 676
- EP-A2- 1 101 642
- EP-A2- 1 164 042
- DE-A1- 10 205 935
- US-A1- 2004 084 929

## Description

The present invention relates generally to retractable mechanisms and retractable roof assemblies for automobiles and, more specifically, to retractable mechanisms adapted to support a hard or soft top for a vehicle.

Most vehicles have rigid roof structures that permanently extend over and cover the passenger compartment. Manufacturers also provide a variety of designs that offer the vehicle operator the opportunity to partially or completely uncover the passenger compartment. Sunroofs and moonroofs are some of the simplest designs, and offer the opportunity to open a portion of the vehicle roof for increased airflow. More complicated designs allow the entire roof structure to be retracted and stored behind the passenger compartment.

Retractable roof systems generally fall into two categories. The most common type of retractable roof design is a convertible soft top or roof. These designs include an articulating structural framework with a flexible cloth or plastic outer skin. In an extended position, the front end of the articulating framework connects to a header above the vehicle windshield and the outer skin extends over the passenger compartment. When retracted, the articulating mechanism, along with the outer skin, fold into a compact shape.

While convertible soft tops offer the choice between a covered or uncovered passenger compartment, they also suffer from several disadvantages in comparison to traditional rigid roof structures. Vehicles with soft tops are typically less well sealed against the elements and are somewhat noisy. They are also less resistant to break-in attempts and have a less finished interior appearance.

Retractable soft tops also present challenges in the design of a rear window. In a rigid roof structure, the rear window design may be dictated by visibility and styling criteria. Large glass rear windows are typically used to provide an unobstructed view to the rear of the vehicle, and to give a pleasing aesthetic appearance. In retractable soft tops, the rear window is typically stored, along with the folded soft top, in the storage area of the vehicle. The least complicated and least expensive approach is to use a flexible plastic rear window. However, plastic rear windows often distort the view, may have an undesirable aesthetic appearance, and features such as heated rear windows cannot be provided. Some more complicated soft top designs use rigid glass windows. Some designs require the window to be stored separately from the folded top, thereby complicating retraction of the vehicle top. Other designs resort to complicated mechanisms to store the rigid rear window without unduly stressing the window. However, retractable soft top roof designs with rigid glass rear windows almost always use a rear window that is much smaller than desirable from a visibility and styling point of view. The reduced size of the window is dictated by retraction and packaging (storing) considerations.

The other type of retractable roof design is a retractable or folding hardtop roof system. Retractable hardtops consist of one or more rigid roof elements that are mechanically articulated such that they can be repositioned into a storage area behind the passenger compartment. Because the retractable hardtop consists of rigid sections, the system can provide a much closer approximation of a traditional rigid roof structure. In the extended position, a retractable hardtop securely covers and seals the passenger compartment, giving the appearance of a permanent roof. A retractable hardtop does a significantly better job of sealing the passenger compartment, reducing noise, and preventing break-ins. However, the retraction and storage of the hardtop presents significant mechanical challenges. Typically, when the retractable hardtop is disposed in the retracted position, it resides in the portion of the vehicle traditionally provided for storage, such as the vehicle's trunk. While the storage space may be completely usable when the hardtop is disposed in the extended position, most consumers prefer not to sacrifice the use of the storage space when the roof is retracted. Therefore, retractable hardtops generally present a tradeoff between storage efficiency and mechanical complexity.

Most modern retractable hardtop designs consist of two or more articulated sections that are automatically folded or stacked in the storage area. In one design, referred to as a "clamshell" design, the roof structure is divided into a front section and a rear section. The front and rear sections are pivotally interconnected and the rear section is pivotally connected to a support structure behind the passenger compartment. Examples of clamshell type retractable hardtop designs are shown in U.S. Patent Nos. 6,217,104 and 5,785,375.

In a clamshell design, the front and rear sections may both be said to have an inner and an outer surface, with the outer surfaces cooperating to form the outer surface of the roof structure when disposed in the extended position. When retracted, the front section folds so as to bring the inner surface of the front section towards the inner surface of the rear section. The front and rear sections are then together positioned into the storage area. Often, the trunk lid of the vehicle moves out of the way to allow the hardtop sections to move into a position in the trunk. The trunk lid is then repositioned to cover the pair of sections. In most designs, the front and rear sections both have generally convex outer surfaces and concave inner surfaces. Therefore, when the inner surfaces are folded towards one another, the concave shapes cause there to be a significant distance between the mid-portions of the folded front and rear sections. Consequently, clamshell designs do not store as compactly as some other designs. Their advantage is that they are significantly less complex than most other designs. Reduced complexity not only reduces manufacturing costs, but also improves the reliability of the system. Clamshell designs also have better structural integrity than some other designs.

An alternative design, which provides improved storage efficiency, may be referred to as a "stacking" design. Again, the roof is divided into two or more sections. However, when the hardtop is retracted, the roof sections are stacked such that the inner surface of one section is adjacent to the outer surface of another section. Because each section typically has a concave inner surface and a convex outer surface, placing the inner surface of one section next to the outer surface of another results in more efficient space utilization. Examples of stacking retractable hardtop designs are shown in U.S. Patent Nos. 6,336,673, 6,318,793, 6,053,560 and 5,979,970. As will be clear to those skilled in the art, stacking designs require significantly more complex articulation mechanisms than clamshell designs. This increased complexity leads to increased costs, reduced reliability, and reduced structural integrity.

There are retractable roof designs that combine the attributes of retractable hard tops and retractable soft tops. An example is shown in U.S. Patent No. 6,422,637. In this design, the retractable roof structure includes three rigid roof sections and a flexible outer skin that is stretched over and covers the roof sections when the roof is disposed in the closed or extended position. The flexible outer skin seals the roof, with the rigid sections defining the structure and shape of the roof. However, U.S. Patent No. 6,422,637 has a complicated folding design such that it does not significantly reduce the cost, complexity, or packaging requirements as compared to a retractable hard top design.

DE 102 05 935 A1 discloses a retractable mechanism for a retractable top of a vehicle. The retractable car top comprises at least a rigid front portion and rigid rear portion and a middle portion, wherein the middle portion may comprise a flexible roof membrane or a rigid roof member. The rigid front portion swings from its operative position, connected to a top of the windscreen to a rearward stored position on a pair of parallel links. These parallel links are connected to a folding framework. The folding framework has connections to the bodywork near the rear of the vehicle and there are links to the rigid rear portion of the retractable car top.

It is an object of the present invention to provide retractable mechanisms that offer an improved compromise between cost, mechanical complexity, space efficiency, and rear window design.

This object is achieved by the invention of claim 1. Other developments of the invention are recited in the sub-claims.

Advantages of the present invention will be readily appreciated as the same becomes better understood by reference to the following detailed description when considered in connection with the accompanying drawings and appended claims, wherein:
- Figure 1: is a top perspective view to a representative retractable hard top with the top shown in the extended position;
- Figure 2: is a top perspective view to a representative retractable hybrid hard and soft top with the top shown in the extended position;
- Figure 3: is a top perspective view of a representative retracting mechanism for moving the hard top of Figure 1 and the hybrid top of Figure 2 between an extended position, a retracted position, and among a plurality of intermediate positions therebetween;
- Figure 4: is a side elevational view of the top in the extended position;
- Figure 5: is a side elevational view of the retracting mechanism in the extended position;
- Figures 6, 8, 10, and 12: are side elevational views of the top as it moves sequentially between the extended position and the retracted position;
- Figures 7, 9, 11, and 13: are side elevational views of the retracting mechanism corresponding to the sequence shown in Figures 6, 8, 10, and 12, respectively, as the top moves between the extended position and the retracted position;
- Figure 14: is a side elevational view of the top in the retracted position;
- Figure 15: is a side elevational view of the retracting mechanism in the same position as the top in Figure 14;
- Figure 16: is an enlarged bottom elevational view of the retracting mechanism;
- Figure 17: is an enlarged top elevational view of the retracting mechanism;
- Figure 18: is a rear view of the retracting mechanism;
- Figure 19: is an enlarged top elevational view of the retracting mechanism showing an opposite side of that shown in Figure 17;
- Figure 20: is a perspective view of articulating links of the retracting mechanism;
- Figure 21: is a top view of the articulating links of Figure 20;
- Figure 22: is a bottom view of the articulating links of Figure 20;
- Figure 23: is an enlarged side elevational view of the retracting mechanism in an intermediate position; and
- Figure 24: is an enlarged side elevational view of the retracting mechanism in a position closer to the retracted position relative to that shown in Figure 23.

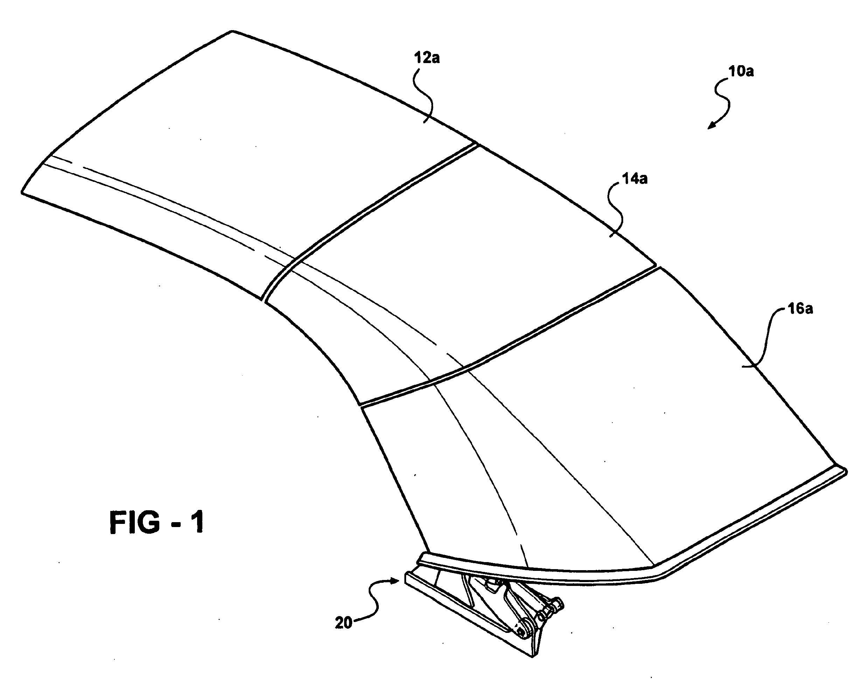

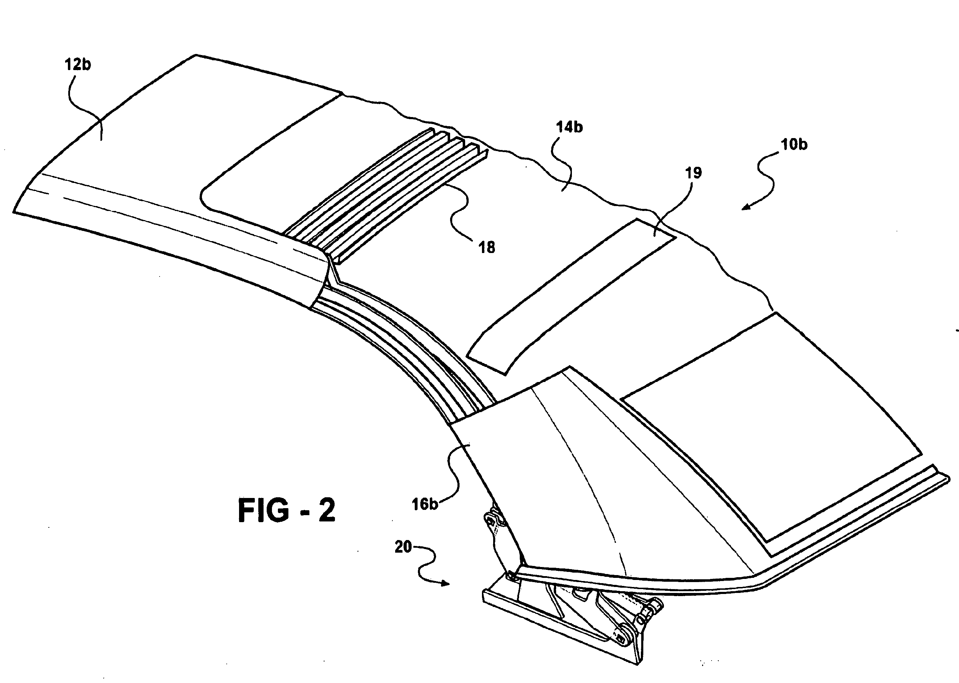

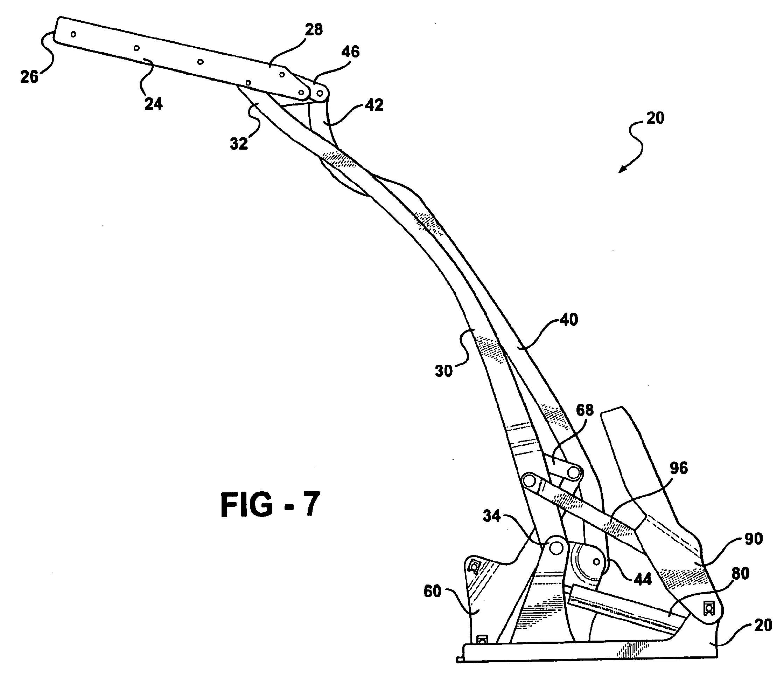

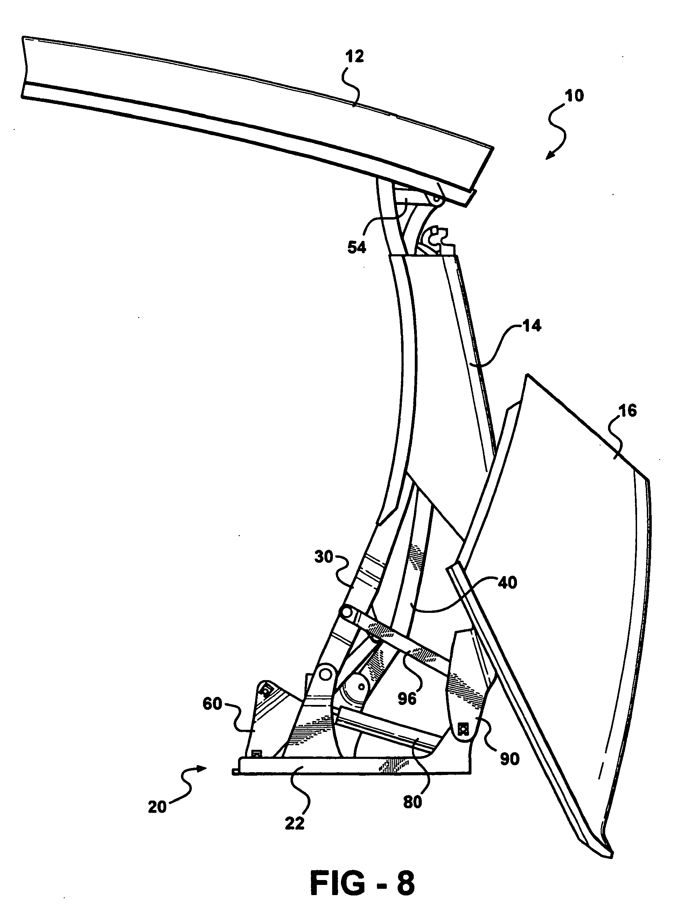

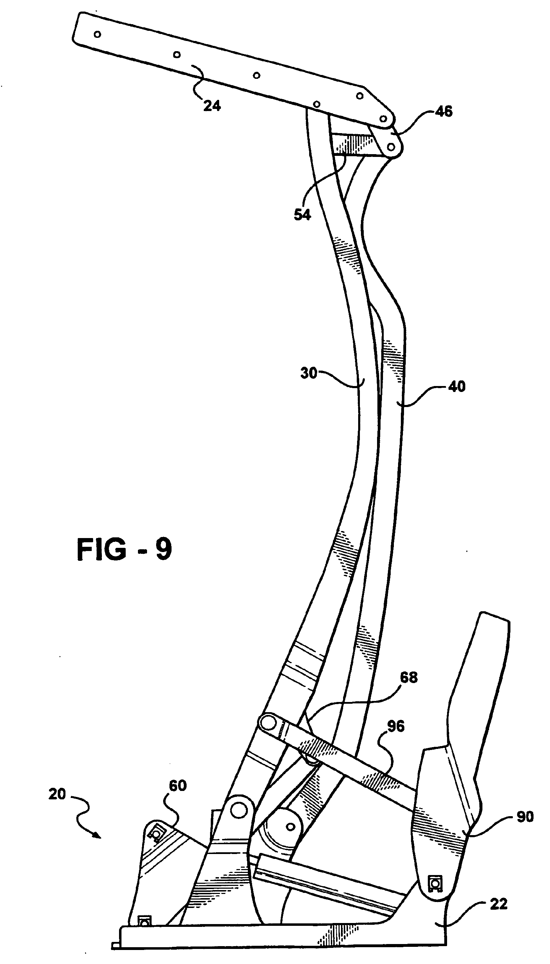

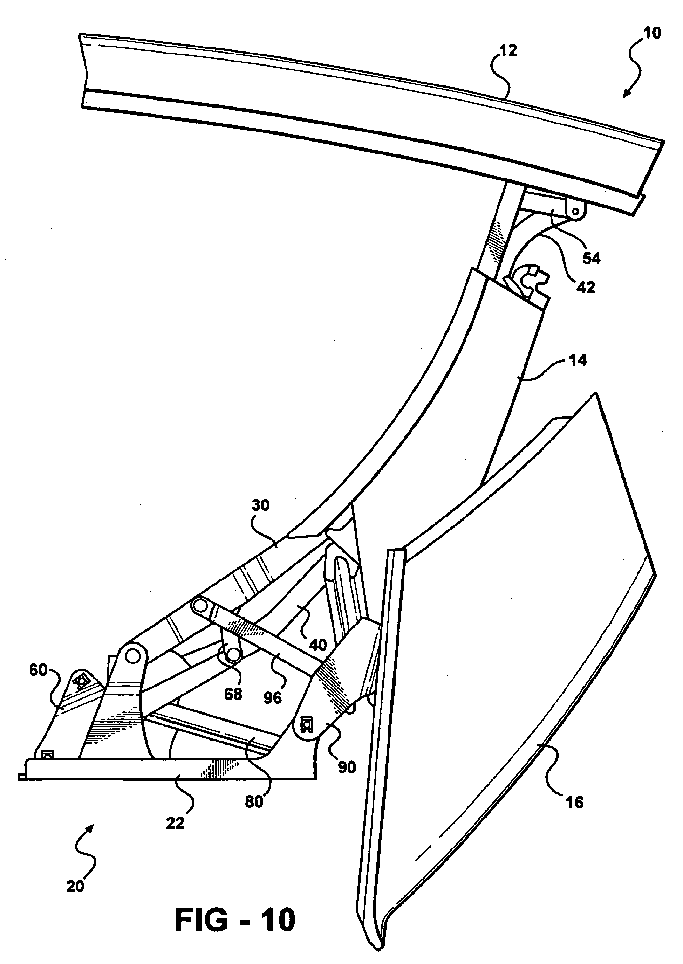

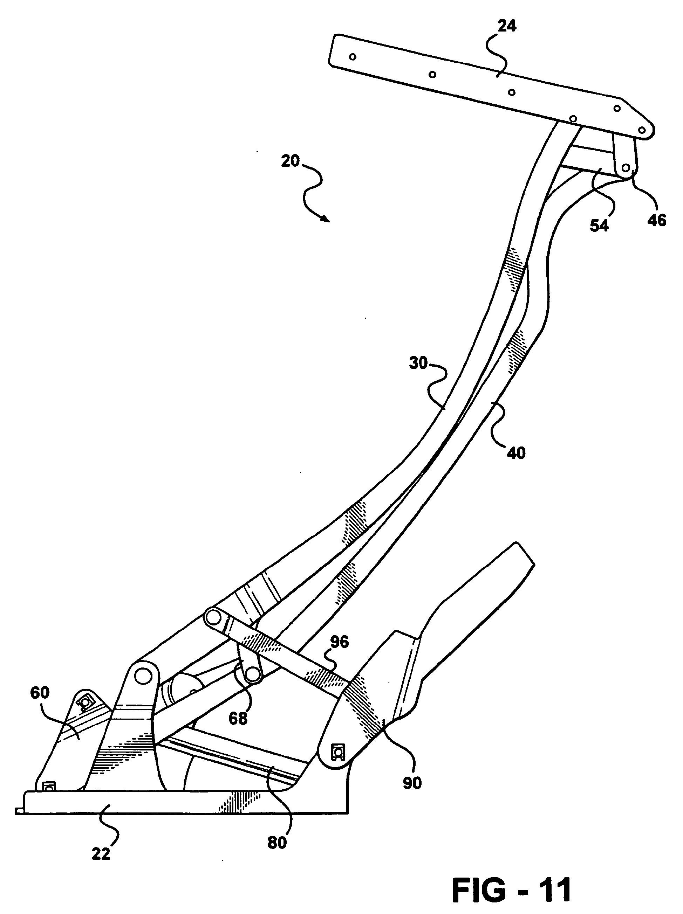

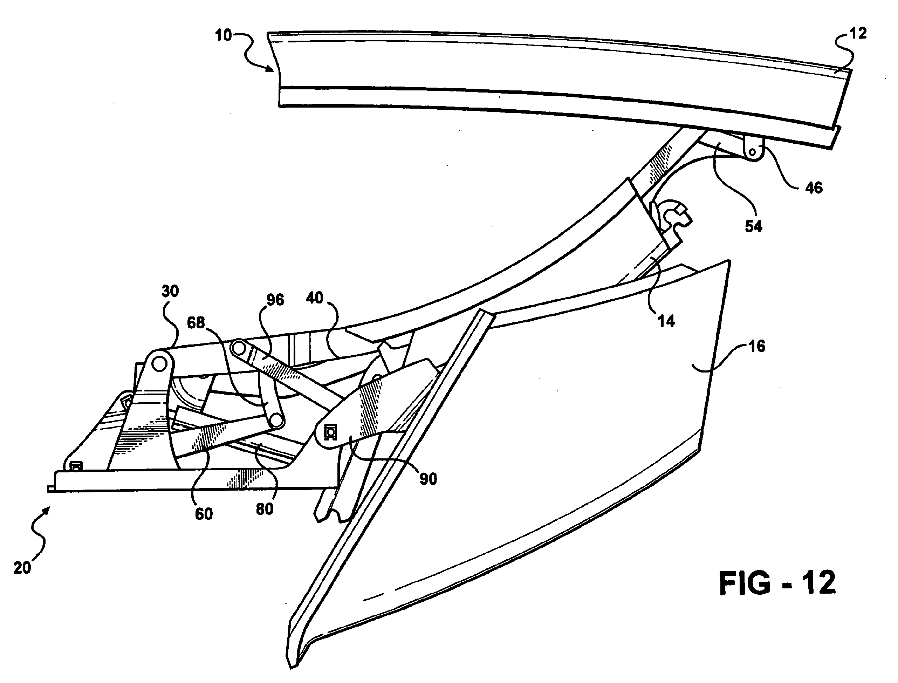

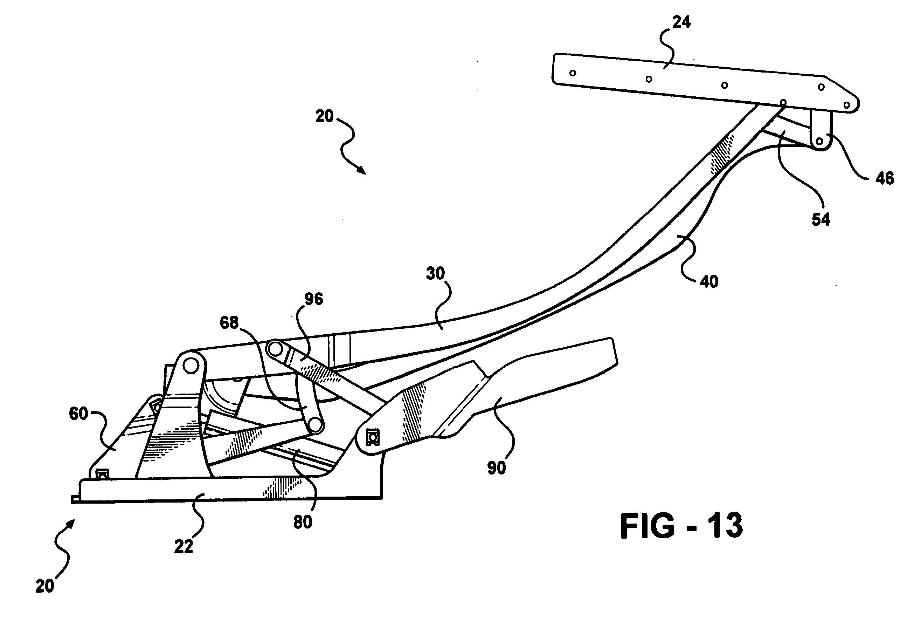

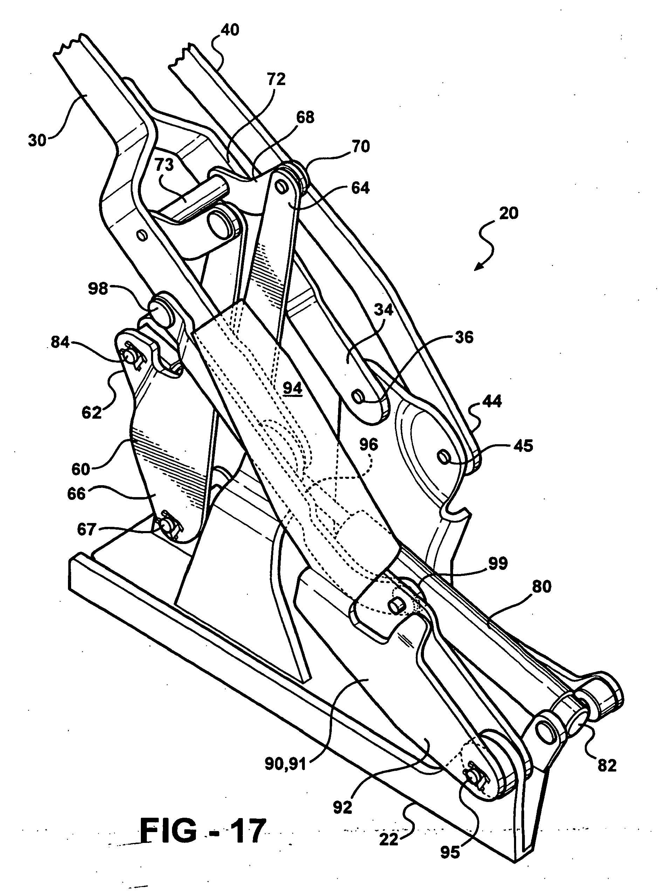

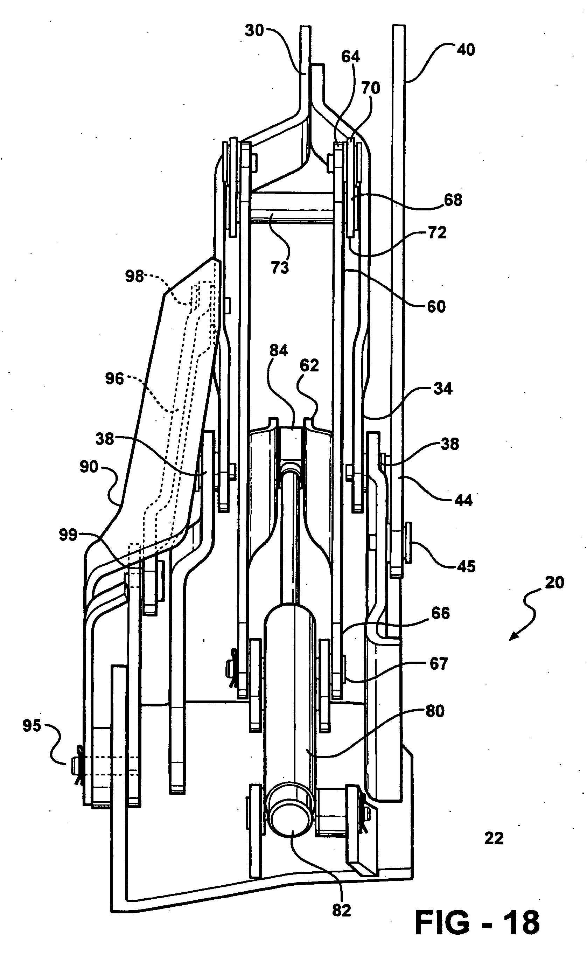

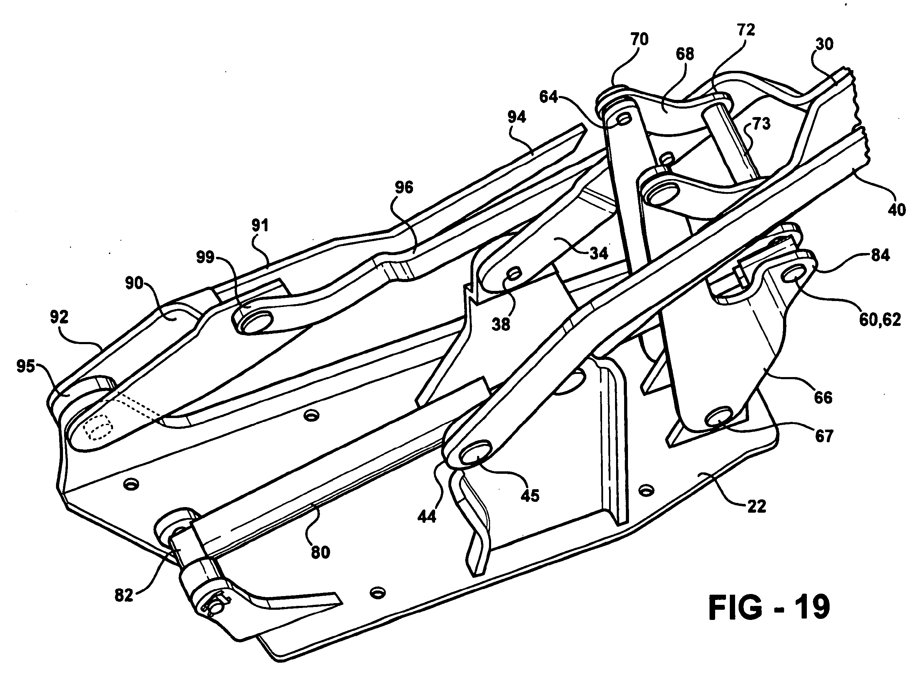

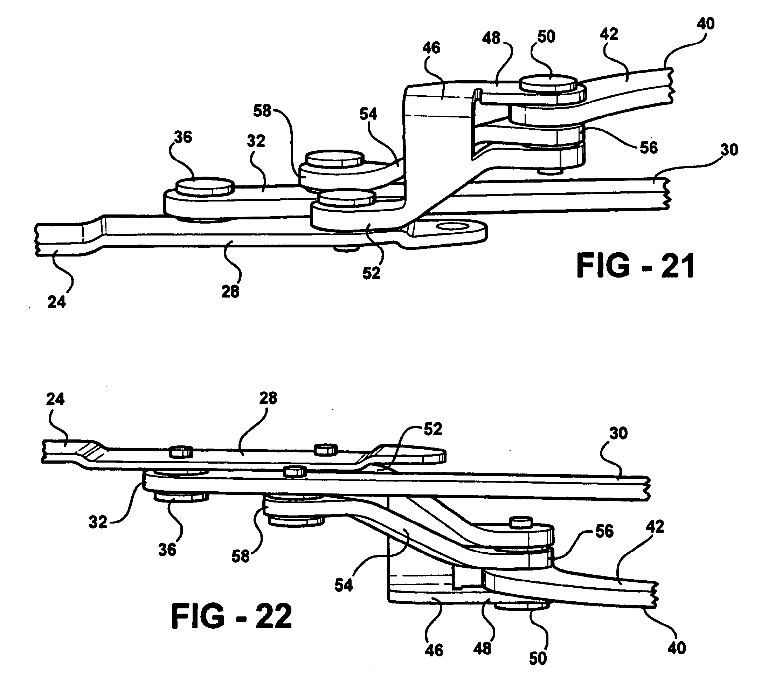

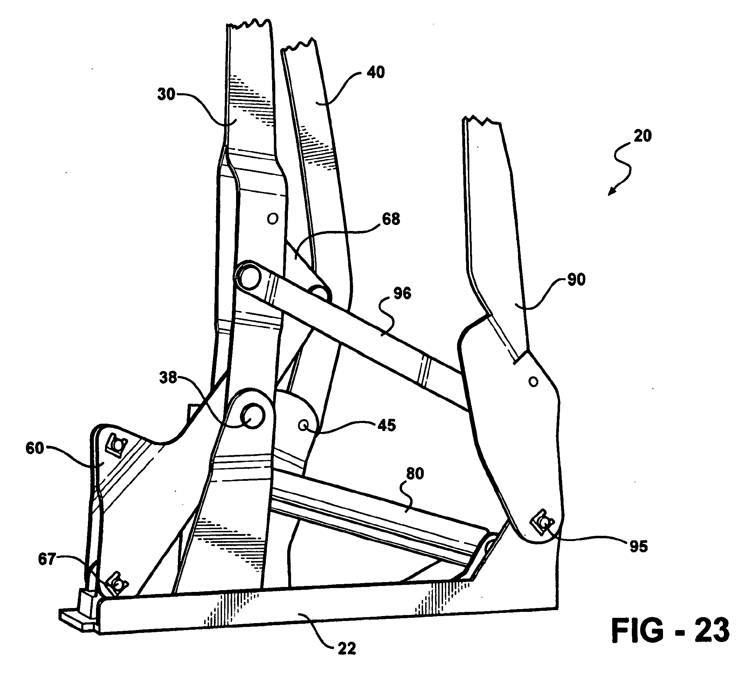

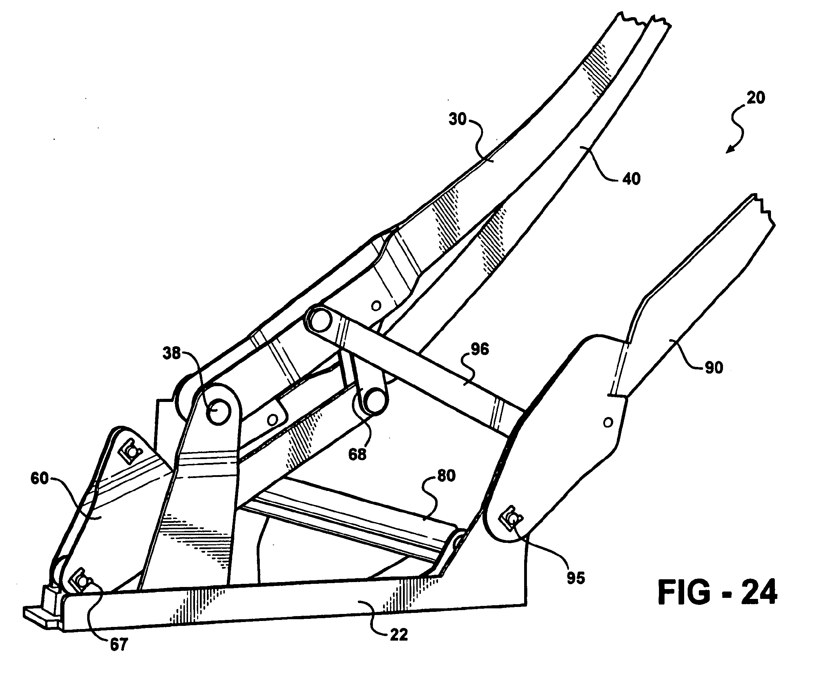

Referring to the figures, two representative embodiments of a retractable convertible top assembly for an automotive vehicle are generally indicated by reference numerals 10a and 10b in Figures 1 through 24. The first embodiment in Figure 1 is a retractable hard top 10a, which includes rigid front 12a, middle 14a and rear 16a sections. The second embodiment in Figure 2 is a retractable hybrid top 10b, which includes a combination of rigid front 12b and rear 16b sections and an open middle section 14b. A soft, membranous cover extends over at least the open middle section 14b and an outer surface of the front section 12b. Preferably, the cover extends over all of the sections 12b, 14b, 16b. A single retracting mechanism design is utilized for both the hard top 10a and the hybrid top 10b, which allows selective movement of the tops between a closed position and an open position.

A representative retracting mechanism, generally indicated by reference numeral 20 in the figures, is described in detail below, wherein the hard top 10a and hybrid top 10b are generically referred to as a retractable top 10. The retracting mechanism 20 includes substantially symmetrically opposite sides disposed about a longitudinal centerline of the vehicle. For descriptive purposes, only one side of the retracting mechanism 20 is shown in the figures. The front, middle and rear sections of the retractable top 10 are hereafter generally indicated by reference numerals 12, 14 and 16, respectively. Each of the front 12, middle 14 and rear 16 sections extends transversely between the opposite sides of the retracting mechanism 20. For the hybrid top 10b, the retracting mechanism 20 preferably includes first 18 and second 19 cross members or bows to support the cover between the opposite sides of the retracting mechanism 20. It should be appreciated that any number of bows may be utilized to properly support the cover between the opposite sides of the retracting mechanism 20.

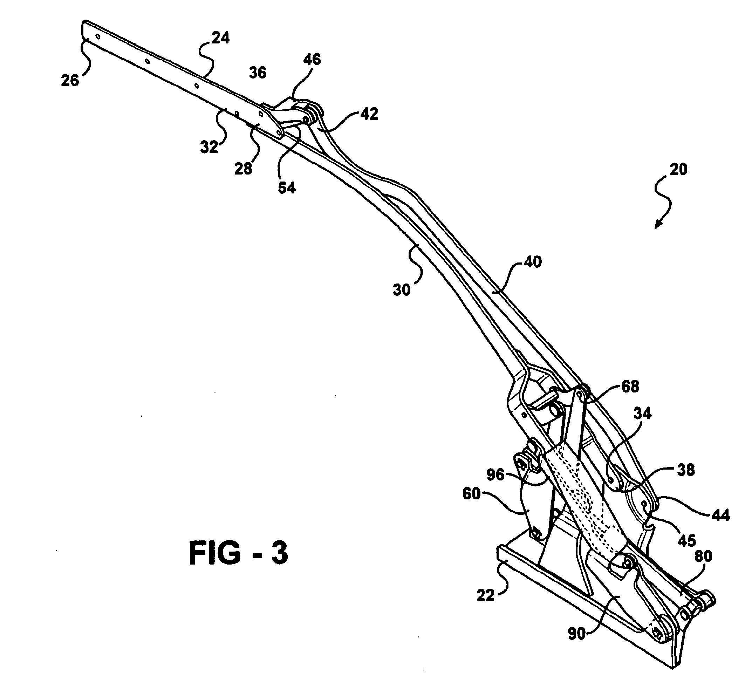

Referring to Figure 3, the retracting mechanism 20 includes a base bracket 22 for fixedly securing the retracting mechanism 20 to the vehicle. The retracting mechanism 20 also includes a side member 24 extending in a generally fore and aft direction of the vehicle between a front end 26 and an opposite rear end 28. The front section 12 of the top 10 is fixedly secured to the side member 24. Optionally, the front section 12 and the side member 24 are integrally formed. For the hybrid top 10b, the first bow 18 is supported by the side member 24 to support the membrane covering. Alternatively, the first bow 18 is integrally formed with one or both of the side member 24 and/or the front section 12b of the hybrid top 10b.

A center link 30 extends between a top or first end 32 and an opposite bottom or second end 34. A pivot pin 36 pivotally interconnects the first end 32 of the center link 30 and the rear end 28 of the side member 24. A pivot pin 38 pivotally interconnects the second end 34 of the center link 30 to the base bracket 22. The middle section 14a of the top 10a is fixedly secured to the center link 30. For the hybrid top 10b, the middle section comprises the second bow 19, which is supported by the center link 30. The second bow 19 may be supported by the center link 30 in a variety of ways. For example, the second bow 19 may be articulated, in a variety of ways, to the center link 30 or may be fixedly attached thereto. A balance link 40 extends between opposite top 42 and bottom 44 ends. Optionally, the second bow 19 is supported by the balance link 40 instead of the center link 30. Either bow 18, 19 may be rigidly or fixedly attached, and may be extruded, molded, stamped, or formed in any other way. Additional or fewer bows 18, 19 may be used.

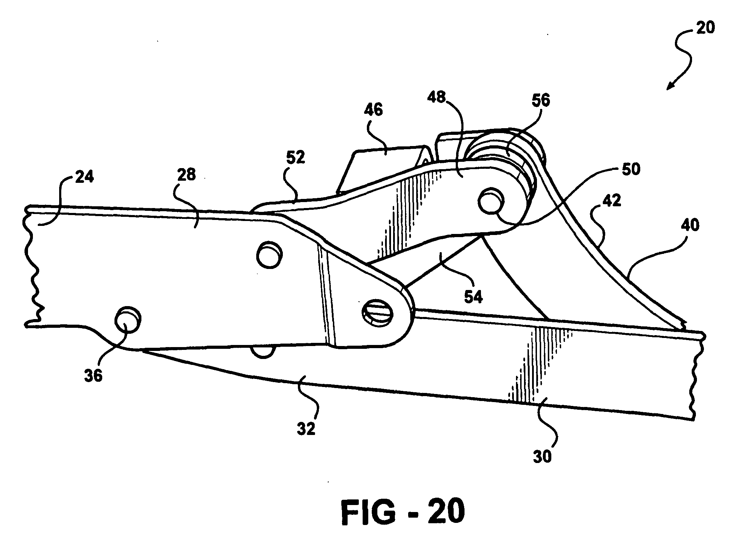

A pivot pin 45 pivotally interconnects the bottom end 44 of the balance link 40 to the base bracket 22. The top end 42 is operatively coupled to both the rear end 28 of the side member 24 and the first end 32 of the center link 30. As best shown in Figures 20 through 22, a first articulating link 46 extends between one end 48 pivotally interconnected by a pivot pin 50 to the balance link 40 adjacent the top end 42 and an opposite end 52 pivotally interconnected to the rear end 28 of the side member 24. A second articulating link 54 extends between one end 56 pivotally coupled to the pivot pin 50 and an opposite end 58 pivotally coupled to the center link 30 adjacent the first end 32.

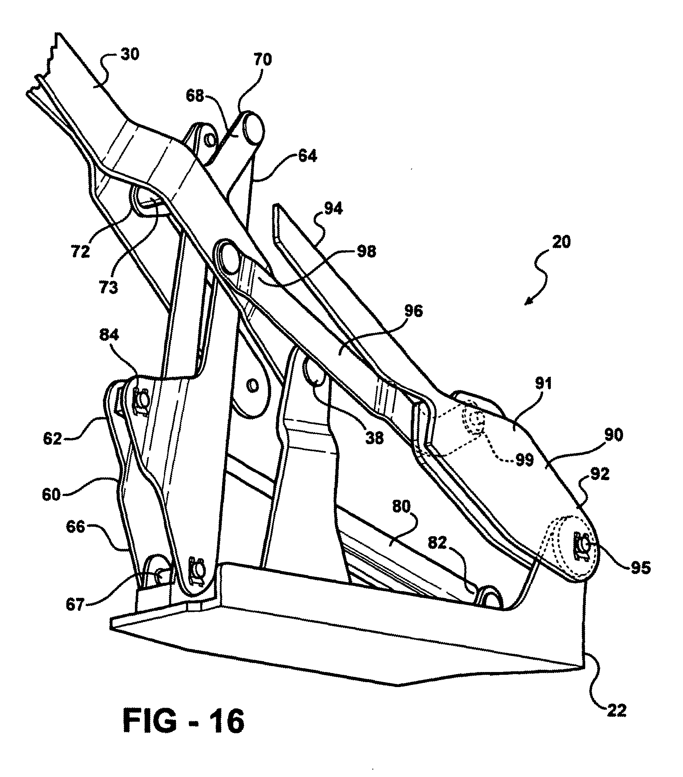

As best shown in Figures 16 through 19, the retracting mechanism 20 includes a knee link 60. The knee link 60 includes an intermediate portion 62 extending between an upper end 64 and a lower end 66. A pivot pin 67 pivotally interconnects the lower end 66 of the knee link 60 to the base bracket 22. A swing arm 68 extends between one end 70 pivotally coupled to the upper end 64 of the knee link 60 and an opposite end 72. A pivot pin 73 pivotally interconnects the opposite end 72 of the swing arm 68 to the center link 30 adjacent the second end 34. A cylinder-type actuator 80 extends between a fixed end 82 pivotally coupled to the base bracket 22 and a movable end 84 pivotally coupled to the intermediate portion 62 of the knee link 60. It should be appreciated that any suitable actuator may be utilized, as known by those skilled in the art.

As best shown in Figure 16, a rear link 90 includes a middle portion 91 that extends between a proximal end 92 and an opposite distal end 94. A pivot pin 95 pivotally interconnects the proximal end 92 of the rear link 90 to the base bracket 22. The rear section 16 is fixedly carried (supported) by the rear link 90. A transfer link 96 interconnects the center link 30 and the rear link 90, such that the rear link 90 and the rear section 16 of the top 10 pivot about the pivot pin 95 in response to corresponding pivotal movement of the center link 30 about the pivot pin 38. More specifically, the transfer link 96 extends between opposite front 98 and rear 99 ends. The front end 98 is pivotally coupled to the center link 30 between the pivot pin 73 and the second end 34 of the center link 30. The rear end 99 is pivotally coupled to the middle portion 91 of the rear link 90.

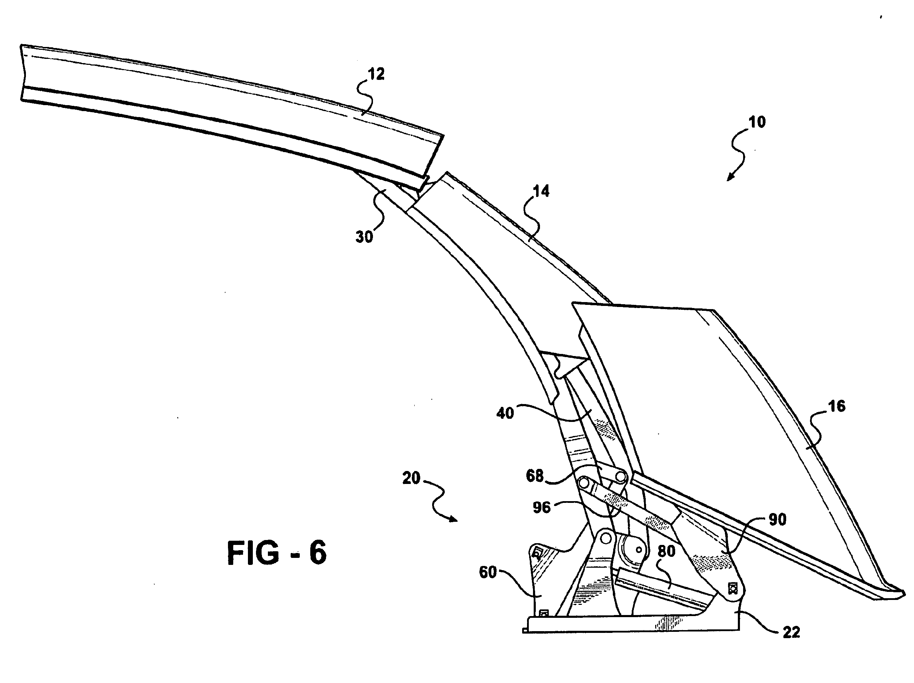

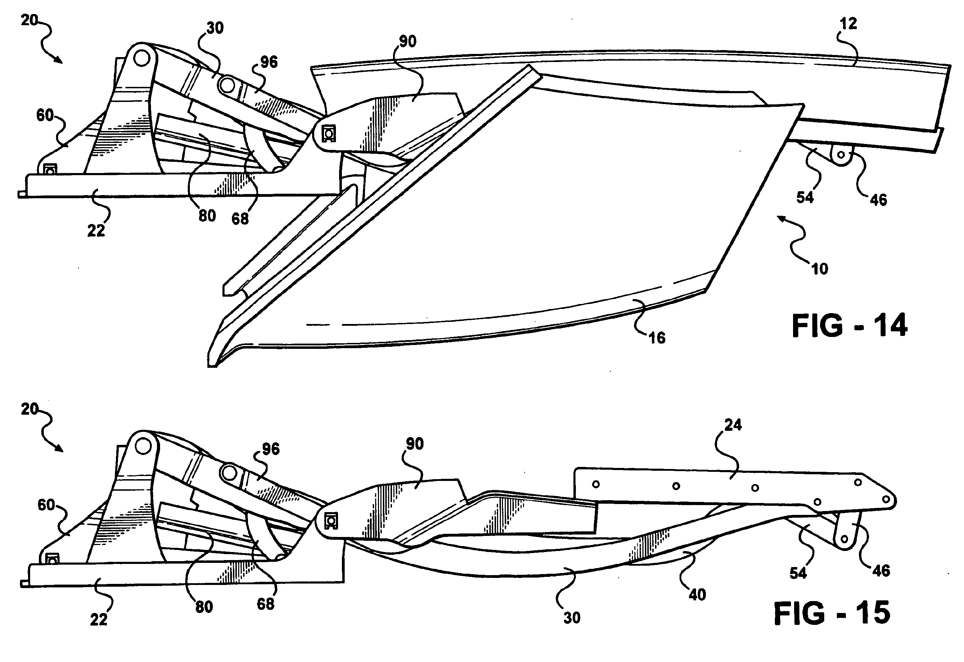

In use, the retracting mechanism 20 allows selective movement and support of the top 10 in a closed position, an open position and any of one of a plurality of intermediate positions therebetween. The top 10 is shown in the closed (extended) position in Figures 1 through 5, the open (retracted) position in Figures 14 and 15 and the intermediate positions in Figures 6 through 13. A description of the movement of the top from the closed position to the open position follows.

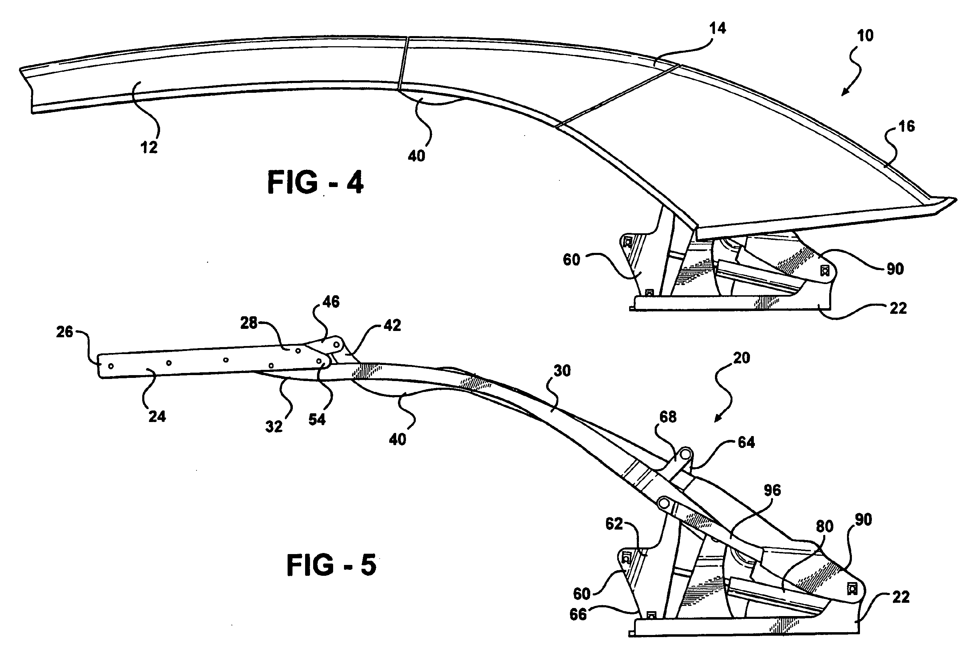

In the closed position shown in Figures 1-5, the top 10 is extended in a generally fore and aft direction in the vehicle and the front section 12 is releasably locked along a top edge of a windshield of the vehicle, as commonly known by those skilled in the art. To open the top 10, the front section 12 of the top 10 is first unlocked from the top edge of the vehicle windshield. The actuator 80 is energized by selective actuation of a suitable switch disposed in the vehicle interior. The actuator 80 causes the knee link 60 to pivot clockwise, as viewed in the figures (e.g., Figures 4-11 and 23 and 24), about the pivot pin 67. The clockwise movement of the knee link 60 tensions the swing arm 68, which in turn translates into clockwise movement of the center link 30 and the middle section 14 about the pivot pin 38. In response, the balance link 40 pivots clockwise about the pivot pin 45 due to the second articulating link 54 interconnecting the balance link 40 and the center link 30. The first 46 and second 54 articulating links, the center link 30 and the balance link 40 collectively define a four bar linkage arrangement, which causes the side member 24 and front section 12 to pivot counterclockwise about the pivot pin 36 as the center link 30 and balance link 40 pivot clockwise about their respective pivot pins 38, 45. The rear link 90 and the rear section 16 pivot clockwise about the pivot pin 95 in response to the clockwise rotation of the center link 30 about the pivot pin 38 due to the transfer link 96 interconnecting the center link 30 and the rear link 90. In concert, the front section 12 closes in a clamshell-like manner relative to the middle section 14, the rear section 16 pivots clockwise about the pivot pin 95, and the middle section 14 pivots clockwise in a rearward direction about the pivot pin 38 until the sections 12, 14 and 16 are stacked in the open position, as shown in Figures 14 and 15. The top 10 can be moved to the closed position by reversing the foregoing steps.

As will be clear to those skilled in the art, the embodiments of the present invention shown and discussed herein may be altered in various ways without departing from the scope of the present invention.

Further, various features of the representative example and the claims may be combined in ways that are not specifically and explicitly enumerated in order to provide additional useful embodiments of the present teachings. In addition, all features disclosed in the description and/or the claims are intended to be disclosed separately and independently from each other for the purpose of original written disclosure, as well as for the purpose of restricting the claimed subject matter independent of the compositions of the features in the embodiments and/or the claims.

## Claims

1. A retractable mechanism (20) for a retractable top (10) of a vehicle, the retractable mechanism being adapted to enable movement of the retractable top between an extended position, in which a passenger compartment of the vehicle is covered, and a retracted position, in which the retractable top is at least partially disposed in a storage compartment defined behind the passenger compartment, the retractable mechanism comprising:
a side member (24) extending between opposite front and rear ends (26, 28),
a balance link (40) having opposite top and bottom ends (42, 44), wherein the bottom end (44) of the balance link is adapted to be pivotably coupled to the vehicle,
a center link (30) having opposite first and second ends (32, 34), wherein the second end (34) of the center link is adapted to be pivotably coupled to the vehicle, and
first and second articulating links (46, 54) operatively coupled between the side member, the balance link and the center link so as to enable movement of the retractable mechanism between the extended and retracted position, wherein
the first articulating link (46) has a first end (48) and an opposite second end (52), wherein the first end (48) of the first articulating link is pivotably coupled by a pivot pin (50) to the balance link (40), and
the second articulating link (54) has a first end (56) and an opposite second end (58),
**characterized in that**
the first end (32) of the center link (30) is pivotably coupled to the rear end (28) of the side member (24),
the second end (52) of the first articulating link is pivotably coupled to the rear end (28) of the side member (24),
the first end (56) of the second articulating link is pivotably coupled by a pivot pin (50) to the balance link (40), and
the second end (58) of the second articulating link is pivotably coupled to the center link (30).

2. A retractable mechanism (20) as in claim 1, wherein the first and second articulating links (46, 54) are pivotably coupled to the balance link (40) by a common pivot pin (50).

3. A retractable mechanism (20) as in claim 1 or 2, wherein the retractable mechanism is arranged such that at least one of the first and second ends (32, 34) of the center link (30) remains forward of its corresponding top or bottom end (42, 44) of the balance link (40) throughout movement of the retractable top (10) between the extended and retracted positions.

4. A retractable mechanism (20) as in claim 3, wherein the center link (30) is adapted to support a middle section (14) of the retractable top (10) throughout movement of the retractable top between the extended and retracted positions.

5. A retractable mechanism (20) as in claim 3 or 4, wherein both of the first and second ends (32, 34) of the center link (30) remain forward of their corresponding top and bottom ends (42, 44) of the balance link (40) throughout movement of the retractable top (10) between the extended and retracted positions.

6. A retractable mechanism (20) as in any preceding claim, wherein the side member (24) is arranged so as to remain substantially aligned in a fore and aft direction of the vehicle throughout movement of the retractable top (10) between the extended position and the retracted position.

7. A retractable top assembly (10a; 10b) capable of providing either a retractable hard top or a retractable soft top during manufacturing of a plurality of vehicles, wherein the vehicles have a substantially common body structure defining a windshield, a storage compartment and a passenger compartment therebetween, the assembly comprising:
the retractable mechanism (20) of any preceding claim, a rear section (16a; 16b) having opposite forward and rearward edges, opposite inner and outer surfaces, and opposite side edges, wherein the inner surface is arranged to face the passenger compartment when the retractable top assembly is disposed in the extended position and the rear section comprises a rigid panel extending between the side edges and between the forward and rearward edges;
a front section (12a; 12b) disposed forwardly of the rear section when the retractable top assembly is disposed in the extended position, the front section having opposite inner and outer surfaces and opposite side edges, wherein the inner surface is arranged to face the passenger compartment when the retractable top assembly is disposed in the extended position and the front section comprises a rigid panel; and
a middle section (14a; 14b) selected from one of:
a flexible roof membrane covering at least the outer surface of the front section and the middle section when the retractable top assembly is disposed in the extended position, or
a rigid roof section (14a) covering the middle section when the retractable top assembly is disposed in the extended position.

8. A retractable top assembly (10a; 10b) as in claim 7, wherein the middle section (14a; 14b) extends fore and aft between the front and rear sections (12a, 16a; 12b, 16b) and laterally between opposite sides that are aligned with the side edge of the front and rear sections when the retractable top assembly is disposed in the extended position.

9. A retractable top assembly (10b) as in claim 7 or 8, wherein the front and rear sections (12a, 16a) are spaced apart to define an open space (14b) therebetween, the flexible membrane covering at least the open space when the retractable top assembly is disposed in the extended position.

10. A retractable top system assembly (10b) as in claim 7, 8 or 9, further including at least one bow (18, 19) coupled to the center link (30) for supporting the flexible roof membrane when the retractable top assembly is disposed in the extended position.

11. A retractable top assembly (10a; 10b) as in any one of claims 7-10, including a rear link (90) adapted to be pivotally coupled to the body of the vehicle.

12. A retractable top assembly (10a; 10b) as in claim 11, wherein the rigid rear panel (16a; 16b) is supported by the rear link (90) for movement therewith between the extended and retracted positions.

13. A retractable top assembly (10a; 10b) as in claim 11 or 12, further including a transfer link (96) coupled between the center link (30) and the rear link (90) and adapted to cause pivotal movement of the rigid rear panel (16a; 16b) in response to corresponding pivotal movement of the center link between the extended and retracted positions.

14. A retractable top assembly (10a; 10b) as in any one of claims 7-12, wherein the front and rear sections (12a, 16a; 12b; 16b) are adapted to be disposed in a stacked manner in the storage compartment when the retractable top assembly is disposed in the retracted position.

15. A retractable top assembly (10a; 10b) as in any one of claims 7-14, wherein the front section (12a; 12b) is fixedly secured to the side member (24).

16. A retractable top assembly (10a) as in any one of claims 7-15, wherein the center link (30) is directly coupled to the middle section (14a).

17. A retractable top system for providing either a retractable hard top or a retractable soft top during manufacturing of a plurality of vehicles having substantially common body structures, each of the vehicles having a passenger compartment and a storage area behind the passenger compartment, each of the vehicles further having a body, a windshield defining the forward end of the passenger compartment and a plurality of attachment points for connecting a retractable top thereto, the system comprising:
a retractable soft top version (10b), the soft top version having an extended position wherein the top version defines a roof over the passenger compartment and inter-connects with the windshield header and a retracted position wherein the top version does not cover the passenger compartment and at least a portion of the top version is disposed in the storage area, the soft top version comprising:
a rear section (16b) defining the rearmost portion of the roof when the soft top version is in the extended position, the rear section having a forward edge, an opposed rearward edge and a pair of opposed side edges extending between the forward and rearward edges, the rear section having an inner surface and an opposed outer surface, the inner surface facing the passenger compartment when the soft top version is in the extended position, the rear section being a rigid panel extending between the opposed side edges and between the forward and rearward edges ;
and
a forward section (12b) disposed forwardly of the rear section when the top is in the extended position, the forward section being an open frame, the forward section having an inner surface and an opposed outer surface, the inner surface facing the passenger compartment when the soft top version is in the extended position;
a flexible roof membrane covering at least the outer surface of the forward section when the soft top version is in the extended position; and
a retractable hard top version (10a), the hard top version having an extended position wherein the top version defines a roof over the passenger compartment and interconnects with the windshield header and a retracted position wherein the top version does not cover the passenger compartment and at least a portion of the top version is disposed in the storage area, the hard top version comprising:
a plurality of roof sections (12a, 14a, 16a), each of the roof sections having a forward edge, an opposed rearward edge, and a pair of opposed side edges extending between the forward and rearward edges, each roof section being a rigid panel extending generally continuously between the forward and rearward edges and between the opposed side edges;
wherein the hardtop version and soft top version have substantially the same retractable mechanism (20) for articulating the versions between the extended and retracted positions, wherein the retractable mechanism (20) is selected from any of claims 1-6; and
wherein a vehicle with a retractable hard top is manufactured by assembling the hard top version to one of the vehicle bodies and a vehicle with a retractable soft top is manufactured by assembling the soft top version to one of the vehicle bodies.

18. A retractable convertible top assembly (10) capable of supporting a retractable convertible hard top (10a) or a retractable convertible hybrid top (10b) for vehicles having a substantially common vehicle body structure defining a windshield, a storage area and a passenger compartment therebetween, the assembly comprising:
a retractable mechanism (20) adapted to be pivotably coupled to the vehicle body,
a front rigid panel (12a; 12b) connected to the retractable mechanism,
a rear rigid panel (16a; 16b) connected to the retractable mechanism, and
one of:
(i) a middle rigid panel (14a) connected to the retractable mechanism between the front and rear rigid panels, or
(ii) an open space (14b) defined between the front and rear rigid panels when the retractable hybrid top is disposed in an extended position, wherein at least the open space is covered by a flexible membrane cover when the
retractable hybrid top is disposed in an extended position,
wherein the retractable mechanism (20) is selected from any one of claims 1-6.

19. A retractable convertible top assembly (10) as in claim 18, wherein the flexible membrane cover also covers the front rigid panel (12b), and optionally the rear rigid panel (16b) when the retractable convertible hybrid top (10b) is disposed in the extended position.

## Patentansprüche

1. Versenkbarer Mechanismus (20) für ein versenkbares Top (10) eines Fahrzeugs, wobei der versenkbare Mechanismus dazu ausgeführt ist, eine Bewegung des versenkbaren Tops zwischen einer ausgezogenen Stellung, in der ein Innenraum des Fahrzeugs bedeckt ist, und einer versenkten Stellung, in der das versenkbare Top zumindest teilweise in einem hinter dem Innenraum definierten Stauraum angeordnet ist, zu ermöglichen, wobei der versenkbare Mechanismus Folgendes umfasst:
ein Seitenelement (24), das sich zwischen einem vorderen und einem hinteren Ende (26, 28), die einander gegenüberliegen, erstreckt,
ein Ausgleichsverbindungsglied (40) mit einem oberen und einem unteren Ende (42, 44), die einander gegenüberliegen, wobei das untere Ende (44) des Ausgleichsverbindungsglieds dazu ausgeführt ist, schwenkbar mit dem Fahrzeug verbunden zu werden,
ein Mittelverbindungsglied (30) mit einem ersten und einem zweiten Ende (32, 34), die einander gegenüberliegen, wobei das zweite Ende (34) des Mittelverbindungsglieds dazu ausgeführt ist, schwenkbar mit dem Fahrzeug verbunden zu werden, und
ein erstes und ein zweites Gelenkverbindungsglied (46, 54), die zwischen dem Seitenelement, dem Ausgleichsverbindungsglied und dem Mittelverbindungsglied wirkverbunden sind, um eine Bewegung des versenkbaren Mechanismus zwischen der ausgezogenen und der versenkten Stellung zu ermöglichen, wobei das erste Gelenkverbindungsglied (46) ein erstes Ende (48) und ein gegenüberliegendes zweites Ende (52) aufweist, wobei das erste Ende (48) des ersten Gelenkverbindungsglieds durch einen Drehzapfen (50) schwenkbar mit dem Ausgleichsverbindungsglied (40) verbunden ist, und
das zweite Gelenkverbindungsglied (54) ein erstes Ende (56) und ein gegenüberliegendes zweites Ende (58) aufweist,
**dadurch gekennzeichnet, dass** das erste Ende (32) des Mittelverbindungsglieds (30) schwenkbar mit dem hinteren Ende (28) des Seitenelements (24) verbunden ist, das zweite Ende (52) des ersten Gelenkverbindungsglieds schwenkbar mit dem hinteren Ende (28) des Seitenelements (24) verbunden ist, das erste Ende (56) des zweiten Gelenkverbindungsglieds durch einen Drehzapfen (50) schwenkbar mit dem Ausgleichsverbindungsglied (40) verbunden ist und das zweite Ende (58) des zweiten Gelenkverbindungsglieds schwenkbar mit dem Mittelverbindungsglied (30) verbunden ist.

2. Versenkbarer Mechanismus (20) nach Anspruch 1, wobei das erste und das zweite Gelenkverbindungsglied (46, 54) durch einen gemeinsamen Drehzapfen (50) schwenkbar mit dem Ausgleichsverbindungsglied (40) verbunden sind.

3. Versenkbarer Mechanismus (20) nach Anspruch 1 oder 2, wobei der versenkbare Mechanismus so angeordnet ist, dass das erste und/oder das zweite Ende (32, 34) des Mittelverbindungsglieds (30) während der ganzen Bewegung des versenkbaren Tops (10) zwischen der ausgezogenen und der versenkten Stellung vor ihrem/seinem entsprechenden oberen oder unteren Ende (42, 44) des Ausgleichsverbindungsglieds (40) bleiben/bleibt.

4. Versenkbarer Mechanismus (20) nach Anspruch 3, wobei das Mittelverbindungsglied (30) dazu ausgeführt ist, einen mittleren Abschnitt (14) des versenkbaren Tops (10) während der ganzen Bewegung des versenkbaren Tops zwischen der ausgezogenen und der versenkten Stellung zu stützen.

5. Versenkbarer Mechanismus (20) nach Anspruch 3 oder 4, wobei sowohl das erste als auch das zweite Ende (32, 34) des Mittelverbindungsglieds (30) während der ganzen Bewegung des versenkbaren Tops (10) zwischen der ausgezogenen und der versenkten Stellung vor ihrem entsprechenden oberen und unteren Ende (42, 44) des Ausgleichsverbindungsglieds (40) bleiben.

6. Versenkbarer Mechanismus (20) nach einem vorhergehenden Anspruch, wobei das Seitenelement (24) dazu angeordnet ist, während der ganzen Bewegung des versenkbaren Tops (10) zwischen der ausgezogenen und der versenkten Stellung im Wesentlichen in einer Längsrichtung des Fahrzeugs ausgerichtet zu bleiben.

7. Versenkbare Topanordnung (10a; 10b), die entweder ein versenkbares Hardtop oder ein versenkbares Softtop während der Herstellung mehrerer Fahrzeuge bereitstellen kann, wobei die Fahrzeuge eine im Wesentlichen gemeinsame Karosseriestruktur aufweisen, die eine Windschutzscheibe, einen Stauraum und einen Innenraum dazwischen definiert, wobei die Anordnung Folgendes umfasst:
den versenkbaren Mechanismus (20) nach einem vorhergehenden Anspruch, einen hinteren Abschnitt (16a; 16b) mit einem vorderen und einem hinteren Rand, die einander gegenüberliegen, einer Innenfläche und eine Außenfläche, die einander gegenüberliegen, und einander gegenüberliegenden Seitenrändern, wobei die Innenfläche so angeordnet ist, dass sie dem Innenraum zugekehrt ist, wenn die versenkbare Topanordnung in der ausgezogenen Stellung angeordnet ist, und der hintere Abschnitt eine starre Platte umfasst, die zwischen den Seitenrändern und zwischen dem vorderen und dem hinteren Rand angeordnet ist;
einen vorderen Abschnitt (12a; 12b), der vor dem hinteren Abschnitt angeordnet ist, wenn die versenkbare Topanordnung in der ausgezogenen Stellung angeordnet ist, wobei der vordere Abschnitt eine Innenfläche und eine Außenfläche, die einander gegenüberliegen, und einander gegenüberliegende Seitenränder aufweist, wobei die Innenfläche so angeordnet ist, dass sie dem Innenraum zugekehrt ist, wenn die versenkbare Topanordnung in der ausgezogenen Stellung angeordnet ist, und der vordere Abschnitt eine starre Platte umfasst; und
einen mittleren Abschnitt (14a; 14b), der aus:
einer flexiblen Dachmembran, die mindestens die Außenfläche des vorderen Abschnitts und des mittleren Abschnitts bedeckt, wenn die versenkbare Topanordnung in der ausgezogenen Stellung angeordnet ist, oder
einem starren Dachabschnitt (14a), der den mittleren Abschnitt bedeckt, wenn die versenkbare Topanordnung in einer ausgezogenen Stellung angeordnet ist, ausgewählt ist.

8. Versenkbare Topanordnung (10a; 10b) nach Anspruch 7, wobei sich der mittlere Abschnitt (14a; 14b) in Längsrichtung zwischen dem vorderen und hinteren Abschnitt (12a, 16a; 12b, 16b) und lateral zwischen gegenüberliegenden Seiten erstreckt, die auf den Seitenrand des vorderen und hinteren Abschnitts ausgerichtet sind, wenn die versenkbare Topanordnung in der ausgezogenen Stellung angeordnet ist.

9. Versenkbare Topanordnung (10b) nach Anspruch 7 oder 8, wobei der vordere und der hintere Abschnitt (12a, 16a) voneinander beabstandet sind, um einen offenen Raum (14b) zwischen sich zu definieren, wobei die flexible Membran mindestens den offenen Raum bedeckt, wenn die versenkbare Topanordnung in der ausgezogenen Stellung angeordnet ist.

10. Versenkbare Topanordnung (10b) nach Anspruch 7, 8 oder 9, die weiterhin mindestens einen Spriegel (18, 19) enthält, der mit dem Mittelverbindungsglied (30) zur Abstützung der flexiblen Dachmembran verbunden ist, wenn sich die versenkbare Topanordnung in der ausgezogenen Stellung befindet.

11. Versenkbare Topanordnung (10a; 10b) nach einem der Ansprüche 7 bis 10, die ein hinteres Verbindungsglied (90) enthält, das dazu ausgeführt ist, schwenkbar mit dem Aufbau des Fahrzeugs verbunden zu werden.

12. Versenkbare Topanordnung (10a; 10b) nach Anspruch 11, wobei die starre hintere Platte (16a; 16b) durch das hintere Verbindungsglied (90) zur Bewegung zwischen der ausgezogenen und der versenkten Stellung gestützt wird.

13. Versenkbare Topanordnung (10a; 10b) nach Anspruch 11 oder 12, die weiterhin ein Übertragungsverbindungsglied (96) enthält, das zwischen dem Mittelverbindungsglied (30) und dem hinteren Verbindungsglied (90) verbunden und dazu ausgeführt ist, eine Schwenkbewegung der starren hinteren Platte (16a; 16b) als Reaktion auf eine entsprechende Schwenkbewegung des Mittelverbindungsglieds zwischen der ausgezogenen und der versenkten Stellung zu bewirken.

14. Versenkbare Topanordnung (10a; 10b) nach einem der Ansprüche 7 bis 13, wobei der vordere und der hintere Abschnitt (12a, 16a; 12b; 16b) dazu ausgeführt sind, auf gestapelte Weise im Stauraum angeordnet zu werden, wenn die versenkbare Topanordnung in der versenkten Stellung angeordnet ist.

15. Versenkbare Topanordnung (10a; 10b) nach einem der Ansprüche 7 bis 14, wobei der vordere Abschnitt (12a; 12b) fest an dem Seitenglied (24) angebracht ist.

16. Versenkbare Topanordnung (10a) nach einem der Ansprüche 7 bis 15, wobei das Mittelverbindungsglied (30) direkt mit dem mittleren Abschnitt (14a) verbunden ist.

17. Versenkbares Topsystem zur Bereitstellung entweder eines versenkbaren Hardtops oder eines versenkbaren Softtops während der Herstellung mehrerer Fahrzeuge, die im Wesentlichen gemeinsame Aufbaustrukturen aufweisen, wobei jedes der Fahrzeuge einen Innenraum und einen Staubereich hinter dem Innenraum aufweist, wobei jedes der Fahrzeuge weiterhin eine Karosserie, eine das vordere Ende des Innenraums definierende Windschutzscheibe und mehrere Befestigungspunkte zur Verbindung eines versenkbaren Tops daran aufweist, wobei das System Folgendes umfasst:
eine versenkbare Softtopversion (10b), wobei die Softtopversion eine ausgezogene Stellung, in der die Topversion ein Dach über den Innenraum definiert und
mit dem Windschutzscheiben-Querholm verbunden ist, und eine versenkte Stellung, in der die Topversion den Innenraum nicht bedeckt und mindestens ein Teil der Topversion im Stauraum angeordnet ist, aufweist, wobei die Softtopversion Folgendes umfasst:
einen hinteren Abschnitt (16b), der den hintersten Teil des Dachs definiert, wenn sich die Softtopversion in der ausgezogenen Stellung befindet, wobei der hintere Abschnitt einen vorderen Rand, einen gegenüberliegenden hinteren Rand und
ein Paar einander gegenüberliegender Seitenränder aufweist, die sich zwischen dem vorderen und dem hinteren Rand erstrecken, wobei der hintere Abschnitt eine Innenfläche und eine gegenüberliegende Außenfläche aufweist, wobei die Innenfläche dem Innenraum zugekehrt ist, wenn sich die Softtopversion in der ausgezogenen Stellung befindet, wobei der hintere Abschnitt eine starre Platte ist, die sich zwischen den einander gegenüberliegenden Seitenrändern und zwischen dem vorderen und dem hinteren Rand erstreckt; und
einen vorderen Abschnitt (12b), der vor dem hinteren Abschnitt angeordnet ist,
wenn sich das Top in der ausgezogenen Stellung befindet, wobei der vordere Abschnitt ein offener Rahmen ist, wobei der vordere Abschnitt eine Innenfläche und eine gegenüberliegende Außenfläche aufweist, wobei die Innenfläche dem Innenraum zugekehrt ist, wenn sich die Softtopversion in der ausgezogenen Stellung befindet;
eine flexible Dachmembran, die mindestens die Außenfläche des vorderen Abschnitts bedeckt, wenn sich die Softtopversion in der ausgezogenen Stellung befindet; und
eine versenkbare Hardtopversion (10a), wobei die Hardtopversion eine ausgezogene Stellung, in der die Topversion ein Dach über den Innenraum definiert und
mit dem Windschutzscheiben-Querholm verbunden ist, und eine versenkte Stellung, in der die Topversion den Innenraum nicht bedeckt und mindestens ein Teil der Topversion im Stauraum angeordnet ist, aufweist, wobei die Hardtopversion Folgendes umfasst:
mehrere Dachabschnitte (12a, 14a, 16a), wobei jeder der Dachabschnitte einen vorderen Rand, einen gegenüberliegenden hinteren Rand und ein Paar einander gegenüberliegender Seitenränder, die sich zwischen dem vorderen und dem hinteren Rand erstrecken, aufweist, wobei jeder Dachabschnitt eine starre Platte ist,
die sich im Wesentlichen durchgehend zwischen dem vorderen und dem hinteren Rand und zwischen den einander gegenüberliegenden Seitenrändern erstreckt;
wobei die Hardtopversion und die Softtopversion im Wesentlichen den gleichen versenkbaren Mechanismus (20) zum Schwenken der Versionen zwischen der ausgezogenen und der versenkten Stellung aufweisen, wobei der versenkbare Mechanismus (20) aus einem der Ansprüche 1 bis 6 ausgewählt ist; und
wobei ein Fahrzeug mit einem versenkbaren Hardtop durch Montieren der Hardtopversion an einem der Fahrzeugaufbauten hergestellt wird und ein Fahrzeug mit einem versenkbaren Softtop durch Montieren der Softtopversion an einer der Fahrzeugkarosserie hergestellt ist.

18. Versenkbare Cabrio-Topanordnung (10), die ein versenkbares Cabrio-Hardtop (10a) oder ein versenkbares Cabrio-Hybridtop (10b) für Fahrzeuge mit einer im Wesentlichen gemeinsamen Fahrzeugkarosseriestruktur, die eine Windschutzscheibe, einen Stauraum und einen Innenraum dazwischen definiert, stützen kann, wobei die Anordnung Folgendes umfasst:
einen versenkbaren Mechanismus (20), der dazu ausgeführt ist, schwenkbar mit dem Fahrzeugaufbau verbunden zu werden,
eine vordere starre Platte (12a; 12b), die mit dem versenkbaren Mechanismus verbunden ist,
eine hintere starre Platte (16a; 16b), die mit dem versenkbaren Mechanismus verbunden ist, und entweder:
(i) eine mittlere starre Platte (14a), die zwischen der vorderen und der hinteren starren Platte mit dem versenkbaren Mechanismus verbunden ist, oder
(ii) einen offenen Raum (14b), der zwischen der vorderen und der hinteren Platte definiert wird, wenn das versenkbare Hybridtop in einer ausgezogenen Stellung angeordnet ist, wobei mindestens der offene Raum durch eine flexible Membranabdeckung bedeckt wird, wenn das Hybridtop in einer ausgezogenen Stellung angeordnet ist, wobei der versenkbare Mechanismus (20) aus einem der Ansprüche 1 bis 6 ausgewählt ist.

19. Versenkbare Cabrio-Topanordnung (10) nach Anspruch 18, wobei die flexible Membranabdeckung des Weiteren die vordere starre Platte (12b) und wahlweise die hintere starre Platte (16b) abdeckt, wenn das versenkbare Cabrio-Hybridtop (10b) in der ausgezogenen Stellung angeordnet ist.

## Revendications

1. Mécanisme rétractable (20) pour une capote rétractable (10) d'un véhicule, le mécanisme rétractable étant conçu pour permettre à la capote rétractable de se déplacer entre une position déployée dans laquelle un habitacle du véhicule est recouvert et une position rétractée dans laquelle la capote rétractable est au moins en partie disposée dans un compartiment de rangement défini à l'arrière de l'habitacle, le mécanisme rétractable comprenant:
un élément latéral (24) s'étendant entre les extrémités avant et arrière opposées (26, 28);
une jonction d'équilibrage (40) ayant des extrémités supérieure et inférieure opposées (42, 44) dans laquelle l'extrémité inférieure (44) de la jonction d'équilibrage est conçue pour être couplée de façon pivotante au véhicule;
une jonction centrale (30) ayant des première et seconde extrémités opposées (32, 34) dans laquelle la seconde extrémité (34) de la jonction centrale est conçue pour être couplée de façon pivotante au véhicule; et
des première et seconde jonctions articulées (46, 54) couplées en fonctionnement entre l'élément latéral, la jonction d'équilibrage et la jonction centrale de façon à permettre au mécanisme rétractable de se déplacer entre la position déployée et la position rétractée,
la première jonction articulée (46) ayant une première extrémité (48) et une seconde extrémité opposée (52), dans laquelle la première extrémité (48) de la première jonction articulée est couplée de façon pivotante à la jonction d'équilibrage (40) au moyen d'une broche pivotante (50); et
la seconde jonction articulée (54) a une première extrémité (56) et une seconde extrémité opposée (58);
**caractérisé en ce que**:
la première extrémité (32) de la jonction centrale (30) est couplée de façon pivotante à l'extrémité arrière (28) de l'élément latéral (24);
la seconde extrémité (52) de la première jonction articulée est couplée de façon pivotante à l'extrémité arrière (28) de l'élément latéral (24);
la première extrémité (56) de la seconde jonction articulée est couplée de façon pivotante à la jonction d'équilibrage (40) au moyen d'une broche pivotante (50);
la seconde extrémité (58) de la seconde jonction articulée est couplée de façon pivotante à la jonction centrale (30).

2. Mécanisme rétractable (20) selon la revendication 1, dans lequel les première et seconde jonctions articulées (46, 54) sont couplées de façon pivotante à la jonction d'équilibrage (40) au moyen d'une broche pivotante (50) commune.

3. Mécanisme rétractable (20) selon la revendication 1 ou 2, dans lequel le mécanisme rétractable est agencé de telle sorte qu'au moins une des première et seconde extrémités (32, 34) de la jonction centrale (30) reste à l'avant de son extrémité supérieure ou inférieure (42, 44) correspondante de la jonction d'équilibrage (40) pendant l'ensemble du mouvement de la capote rétractable (10) entre la position déployée et la position rétractée.

4. Mécanisme rétractable (20) selon la revendication 3, dans lequel la jonction centrale (30) est conçue pour supporter une section centrale (14) de la capote rétractable (10) pendant l'ensemble du mouvement de la capote rétractable entre la position déployée et la position rétractée.

5. Mécanisme rétractable (20) selon la revendication 3 ou 4, dans lequel tant la première que la seconde extrémité (32, 34) de la jonction centrale (30) restent à l'avant de leurs extrémités supérieure et inférieure (42, 44) correspondantes de la jonction d'équilibrage (40) pendant l'ensemble du mouvement de la capote rétractable (10) entre la position déployée et la position rétractée.

6. Mécanisme rétractable (20) selon l'une quelconque des revendications précédentes, dans lequel l'élément latéral (24) est agencé de façon à rester sensiblement aligné dans une direction avant et arrière du véhicule pendant l'ensemble du mouvement de la capote rétractable (10) entre la position déployée et la position rétractée.

7. Ensemble capote rétractable (10a; 10b) permettant de mettre en place soit une capote rigide rétractable soit une capote souple rétractable pendant la fabrication d'une pluralité de véhicules, dans lequel les véhicules ont une structure de carrosserie sensiblement commune définissant un pare-brise, un compartiment de rangement et un habitacle intercalé, l'ensemble comprenant :
le mécanisme rétractable (20) selon l'une quelconque des revendications précédentes,
une section arrière (16a; 16b) ayant des bords avant et arrière opposés, des surfaces intérieure et extérieure opposées et des bords latéraux opposés, dans lequel la surface intérieure est agencée pour faire face à l'habitacle lorsque l'ensemble capote rétractable est disposé dans la position déployée et la section arrière comprend un panneau rigide s'étendant entre les bords latéraux et entre les bords avant et arrière;
une section avant (12a; 12b) disposée vers l'avant de la section arrière lorsque l'ensemble capote rétractable est disposé dans la position déployée, la section avant ayant des surfaces intérieure et extérieure opposées et des bords latéraux opposés, dans laquelle la surface intérieure est agencée pour faire face à l'habitacle lorsque l'ensemble capote rétractable est disposé dans la position déployée et la section avant comprend un panneau rigide; et
une section centrale (14a; 14b) sélectionnée dans le groupe constitué par:
une membrane de toit flexible couvrant au moins la surface extérieure de la section avant et la section centrale lorsque l'ensemble capote rétractable est disposé dans la position déployée; ou
une section de toit rigide (14a) couvrant la section centrale lorsque l'ensemble capote rétractable est disposé dans la position déployée.

8. Ensemble capote rétractable (10a ; 10b) selon la revendication 7, dans lequel la section centrale (14a; 14b) s'étend devant et derrière entre les sections avant et arrière (12a, 16a; 12b, 16b) et en côté entre les côtés opposés qui sont alignés avec le bord latéral des sections avant et arrière lorsque l'ensemble capote rétractable est disposé dans la position déployée.

9. Ensemble capote rétractable (10b) selon la revendication 7 ou 8, dans lequel les sections avant et arrière (12a, 16a) sont disposées séparément pour définir un espace ouvert (14b) entre, la membrane flexible couvrant au moins l'espace ouvert lorsque l'ensemble capote rétractable est disposé dans la position déployée.

10. Ensemble système de capote rétractable (10b) selon la revendication 7, 8 ou 9, comprenant en outre au moins un arceau (18, 19) couplé à la jonction centrale (30) pour supporter la membrane de toit flexible lorsque l'ensemble capote rétractable est disposé dans la position déployée.

11. Ensemble capote rétractable (10a; 10b) selon l'une quelconque des revendications 7 à 10, comprenant une jonction arrière (90) conçue pour être couplée de façon pivotante à la carrosserie du véhicule.

12. Ensemble capote rétractable (10a; 10b) selon la revendication 11, dans lequel le panneau rigide arrière (16a; 16b) est soutenu par la jonction arrière (90) pour effectuer un mouvement avec elle entre la position déployée et la position rétractée.

13. Ensemble capote rétractable (10a; 10b) selon la revendication 11 ou 12, comprenant en outre une jonction de transition (96) couplée entre la jonction centrale (30) et la jonction arrière (90) et conçue pour provoquer un mouvement de pivotement du panneau rigide arrière (16a; 16b) en réponse à un mouvement de pivotement correspondant de la jonction centrale entre la position déployée et la position rétractée.

14. Ensemble capote rétractable (10a; 10b) selon l'une quelconque des revendications 7 à 13, dans lequel les sections avant et arrière (12a, 16a; 12b; 16b) sont conçues pour être disposées de façon empilée dans le compartiment de rangement lorsque l'ensemble capote rétractable est disposé dans la position rétractée.

15. Ensemble capote rétractable (10a; 10b) selon l'une quelconque des revendications 7 à 14, dans lequel la section avant (12a; 12b) est fixée fixement à l'élément latéral (24).

16. Ensemble capote rétractable (10a) selon l'une quelconque des revendications 7 à 15, dans lequel la jonction centrale (30) est directement couplée à la section centrale (14a).

17. Système de capote rétractable permettant de mettre en place soit une capote rigide rétractable soit une capote souple rétractable pendant la fabrication d'une pluralité de véhicules ayant des structures de carrosserie sensiblement communes, chacun des véhicules ayant un habitacle et une zone de rangement placée à l'arrière de l'habitacle, chacun des véhicules ayant en outre une carrosserie, un pare-brise définissant l'extrémité avant de l'habitacle et une pluralité de points d'attache permettant d'attacher dessus une capote rétractable, le système comprenant :
une version de capote souple rétractable (10b), la version de capote souple ayant une position déployée dans laquelle la version de capote définit un toit placé sur l'habitacle et s'interconnecte avec la partie haute du pare-brise et une position rétractée dans laquelle la version de capote ne couvre pas l'habitacle et au moins une partie de la version de capote est disposée dans la zone de rangement, la version de capote souple comprenant:
une section arrière (16b) définissant la partie la plus reculée du toit lorsque la version de capote souple est dans la position déployée, la section arrière ayant un bord avant, un bord arrière opposé et une paire de bords latéraux opposés s'étendant entre les bords avant et arrière, la section arrière ayant une surface intérieure et une surface extérieure opposée, la surface intérieure faisant face à l'habitacle lorsque la version de capote souple est dans la position déployée, la section arrière étant un panneau rigide s'étendant entre les bords latéraux opposés et entre les bords avant et arrière; et
une section avant (12b) disposée vers l'avant de la section arrière lorsque la capote est dans la position déployée, la section avant étant un cadre ouvert, la section avant ayant une surface intérieure et une surface extérieure opposée, la surface intérieure faisant face à l'habitacle lorsque la version de capote souple est dans la position déployée;
une membrane de toit flexible couvrant au moins la surface extérieure de la section avant lorsque la version de capote souple est dans la position déployée; et
une version de capote rigide rétractable (10a), la version de capote rigide ayant une position déployée dans laquelle la version de capote définit un toit sur l'habitacle et s'interconnecte avec la partie haute du pare-brise et une position rétractée dans laquelle la version de capote ne recouvre pas l'habitacle et au moins une partie de la version de capote est disposée dans la zone de rangement, la version de capote rigide comprenant:
une pluralité de sections de toit (12a, 14a, 16a), chacune des sections de toit ayant un bord avant, un bord arrière opposé et une paire de bords latéraux opposés s'étendant entre les bords avant et arrière, chaque section de toit étant un panneau rigide s'étendant généralement en continu entre les bords avant et arrière et entre les bords latéraux opposés;
dans lequel la version de capote rigide et la version de capote souple ont sensiblement le même mécanisme rétractable (20) pour articuler les versions entre la position déployée et la position rétractée, dans lequel le mécanisme rétractable (20) est sélectionné selon l'une quelconque des revendications 1 à 6;
dans lequel un véhicule doté d'une capote rigide rétractable est fabriqué en assemblant la version de capote rigide à l'une des carrosseries de véhicule et un véhicule équipé d'une capote souple rétractable est fabriqué en assemblant la version de capote souple à une des carrosseries du véhicule.

18. Ensemble capote convertible rétractable (10) capable de supporter une capote convertible rétractable rigide (10a) ou une capote convertible rétractable hybride (10b) pour des véhicules ayant une structure de carrosserie de véhicule sensiblement commune définissant un pare-brise, une zone de rangement et un habitacle entre, l'ensemble comprenant:
un mécanisme rétractable (20) conçu pour être couplé de façon pivotante à la carrosserie de véhicule ;
un panneau rigide avant (12a; 12b) relié au mécanisme rétractable;
un panneau rigide arrière (16a; 16b) relié au mécanisme rétractable; et
un des éléments suivants parmi:
(i) un panneau rigide central (14a) relié au mécanisme rétractable entre les panneaux rigides avant et arrière; ou
(ii) un espace ouvert (14b) défini entre les panneaux rigides avant et arrière lorsque la capote hybride rétractable est disposée dans une position déployée dans laquelle au moins l'espace ouvert est recouvert par un cache-membrane flexible lorsque la capote hybride rétractable est disposée dans une position déployée;
dans lequel le mécanisme rétractable (20) est sélectionné dans le groupe constitué par l'une quelconque des revendications 1 à 6.

19. Ensemble capote convertible rétractable (10) selon la revendication 18, dans lequel le cache-membrane flexible couvre également le panneau rigide avant (12b) et en option le panneau rigide arrière (16b) lorsque la capote convertible rétractable hybride (10b) est disposée dans la position déployée.
